# EUROPÄISCHE PATENTSCHRIFT

(11) **EP 2 643 660 B1**
(45) Veröffentlichungstag und Bekanntmachung des Hinweises auf die Patenterteilung: **06.06.2018**
(21) Anmeldenummer: 11787878.5
(22) Anmeldetag: 24.11.2011
(51) Int. Cl.: G01C 3/08, G01C 15/00

(54) **ROTATIONSLASER**
ROTATING LASER
LASER ROTATIF

(30) Priorität: 25.11.2010 EP 10192628
(43) Veröffentlichungstag der Anmeldung: 02.10.2013
(73) Patentinhaber: Leica Geosystems AG, 9435 Heerbrugg (CH)
(72) Erfinder: MÖLLER, Bernd, CH-9450 Lüchingen (CH)
(74) Vertreter: Kaminski Harmann
(86) Internationale Anmeldenummer: PCT/EP2011/070927
(87) Internationale Veröffentlichungsnummer: WO 2012/069582

(56) Entgegenhaltungen:
- WO-A1-2009/053085
- DE-A1-102007 049 123

## Beschreibung

Die Erfindung betrifft einen Rotationslaser zur Erzeugung eines Referenzstrahls nach dem Oberbegriff des Anspruchs 1 und ein Verfahren zur Ausrichtung einer Laserfläche nach dem Oberbegriff des Anspruchs 9.

Rotationslaser, die zur Markierung von Punkten oder Objekten oder zur Festlegung von Pfaden oder Referenzlinien verwendet werden, finden seit vielen Jahren im industriellen Bereich oder im Bauwesen Anwendung. Mit ihnen lassen sich horizontale, vertikale oder auch diagonale Ebenen, welche eine Hilfestellung zur Orientierung oder Positionierung an Objekten bieten, projizieren.

Aufgebaut ist ein Rotationslaser zumeist aus einer rotierenden Optik, die Teil einer Lasereinheit ist und mittels derer ein Referenzlaserstrahl derart bewegt emittiert werden kann, dass ein wahrnehmbarer oder ein durch Detektoren detektierbarer Pfad bzw. eine Linie auf einer Oberfläche erzeugt wird. Damit der Pfad entsprechend definierter Vorgaben ausgerichtet werden kann, ist die Lasereinheit schwenkbar in zwei senkrecht aufeinander stehenden Richtungen relativ zu einem die Lasereinheit umgebenden Gehäuse gelagert. Zur Emission des Lasers aus dem Gehäuse heraus weist das Gehäuse zusätzlich optisch transparente Sichtfester oder Aussparungen auf.

In der US 5,852,493 ist ein sich selbst ausrichtender Rotationslaser mit einem doppelten Neigungsmechanismus geoffenbart. Der Laser weist eine mit einem Rahmen verbundene Lichtquelle auf, wobei der Rahmen kardanisch aufgehängt ist und Rahmen und Aufhängung mit einer rotierbaren Basis kombiniert sind. Weiters sind an der Aufhängung in zwei Richtungen ausgerichtete Stellmechanismen angeordnet um die Lichtquelle auszurichten. Zwei Lagesensoren sind an dem Rahmen in einem 90° Winkel zueinander angeordnet, wobei diese drehbar gelagert sind. Durch ein Auslenken der Sensoren aus einer Referenzposition können die Stellmechanismen die Lichtquelle in eine Lage auslenken, sodass die dadurch entstehende Veränderung der Neigung der Sensoren wieder deren Referenz entspricht und die Lichtquelle dann eine definierte Neigung aufweist. In einer Ausführung werden zwei Sensoren verwendet, die beide an einer gemeinsamen Aufnahme angeordnet sind und dadurch gleichzeitig beeinflusst werden.

In der EP 2 144 037 ist ein Rotationslaser, insbesondere ein sich selbst ausgleichender d.h. ein sich horizontierender Rotationslaser und eine Methode zur Messung der Neigung seiner Rotationsachse offenbart. Dieser Rotationslaser weist eine Basis und eine Lasereinheit zur Emission und Rotation eines Laserstrahls um eine Rotationsachse auf, sodass der rotierende Laserstrahl eine Laserebene definiert. Die Lasereinheit ist dabei schwenkbar gegenüber der Basis ausgeführt und die Rotationsachse damit in mindestens eine Richtung neigbar. Darüber hinaus ist an dem Gerät ein Neigungssensor zum Messen der Neigung der Achse angeordnet, der seine Lage zusammen mit der Lasereinheit verändert und um die Rotationsachse der Lasereinheit drehbar gelagert ist. So ist die Neigung der Rotationsachse an mindestens zwei unterschiedlichen Positionen messbar und daraus eine absolute Neigung ableitbar.

Rotationslaser waren ursprünglich nicht dafür vorgesehen Distanzen zu Punkten auf jenen Oberflächen zu messen, auf welche der Laserstrahl projiziert wird. Aus dem Stand der Technik sind heute dennoch bereits Ausführungen bekannt, die einen Rotationslaser mit einer Distanzmessfunktionalität kombinieren, um z.B. mit der Projektion einer Ebene zugleich eine Entfernungsinformation zu erhalten und damit einen Grundriss eines Raumes zu generieren.

In der WO 2009/053085 wird ein distanzmessendes Verfahren bzw. ein referenzlinienprojizierendes und distanzmessendes Gerät wie z.B. ein Rotationslaser beschrieben, bei welchem die zur Projektion genutzte Emission oder zumindest deren Strahlgang ebenfalls für eine Entfernungsmessung genutzt wird. Hierbei wird anhand eines optischen Messstrahls ein definierter Messpfad durchlaufen bzw. abgefahren, d.h. der Messstrahl wird derart geführt, dass die Trajektorie seiner Projektion auch der zu projizierenden Referenzlinie entspricht. Dabei wird zu mindestens einem Punkt des Messpfades eine Distanz bestimmt, wobei für das Bestimmen der Distanz der Messpfad mindestens einmal wiederholt abgefahren bzw. durchlaufen wird. Die Distanzbestimmung erfolgt durch einen Distanzmesser, der in das Gerät integriert ist, wobei ein emittierter Messstrahl vorzugsweise koaxial mit dem Referenzstrahl gekoppelt ist. Diese Ausführung weist weiter zwei Neigungssensoren auf, durch welche ein definierter Neigungswinkel der Laserebene bestimmt werden kann. Diese zur Bestimmung oder Justierung der Lage der Ebene vorgesehenen Sensoren stellen gleichzeitig einen Nachteil dieser Ausführung dar, da die mit den Sensoren erreichbare Genauigkeit nicht für alle Anwendung ausreichend hoch ist und die Sensoren darüber hinaus nur einen begrenzten Messbereich vorweisen, welcher den Einsatz des Gerätes hauptsächlich in einer aufrechten, jedoch nicht gekippt in einer liegenden Position zulässt. In der DE 10 2007 049123 ist ein im Vorfeld einer Projektion von Markierungen auf einer Projektionsebene in unterschiedlichen Parallelebenen auszuführendes Aufstellungs- und Initialisierungsverfahren zur definierten Ausrichtung eines Markier- und/oder Nivelliergeräts mit einer Lichtquelle und einem Entfernungsmesser beschrieben.

Im Rahmen dieses Verfahrens erfolgt in einem ersten Schritt ein Ausrichten einer Basis (X-/Y Ebene) des Markier- und/oder Nivelliergeräts zunächst senkrecht zur Oberfläche, insbesondere horizontal mittels an der Basis angeordneter Libellen. Danach erfolgt in einem zweiten Schritt ein Rotieren des Geräts um eine vertikale Achse und währenddessen ein Entfernungsmessen zur Oberfläche, wobei eine geringste Entfernung und ein zugehöriger Rotationswinkel bestimmt werden. In dieser bestimmten Winkelstellung stehen aufgrund der strukturellen Ausgestaltung des Geräts eine Gehäusefläche (Bezugsebene), aus der der punkt- oder linienförmige Projektionsstrahl austritt, in einer Startposition parallel zur Oberfläche und der Projektions- bzw. Messstrahl senkrecht zu dieser Oberfläche. Nach Ausrichten des Geräts in diese Stellung können durch ein definiertes Verschwenken der Projektionseinheit um eine Schwenkachse (welche parallel zur Oberfläche und horizontal verläuft) nun im Anschluss an die vorgenommene Geräteausrichtung Linien oder Punkte in bestimmten Abständen auf die Oberfläche projiziert werden.

Eine genaue Ausrichtung einer Laserebene bzw. einer Laserfläche relativ zu einer Oberfläche, insbesondere senkrecht zu einer Oberfläche, kann bei den bisher bekannten Rotationslasern nur durch eine Positionsänderung des Lasers selbst oder etwa durch ein manuell gesteuertes Schwenken der emittierten Laserfläche erfolgen. Dadurch kann das exakte Ausrichten nur mit einem hohen Zeitaufwand erreicht werden und ist darüber hinaus nur bedingt genau, im Rahmen der Genauigkeit des Augenmasses des Benutzers, durchführbar. Die Möglichkeit diese Ausrichtung einfach und schnell vornehmen zu können besteht weiterhin nur für gut ausgebildete, erfahrene oder hoch qualifizierte Benutzer, da dabei viele Details zu berücksichtigen sind. Eine Benutzerfreundlichkeit bei der Ausrichtung der Laserfläche ist somit nicht gegeben. Unter diesen Umständen kann sich für den durchschnittlichen Benutzer eines Rotationslasers das Ausrichten zu einem aufwändigen und komplizierten Prozess entwickeln. Darüber hinaus kann eine eingestellte Ausrichtung der Laserfläche durch Störungen in der Lage des Rotationslasers, z.B. durch ein unbeabsichtigtes Anstossen an den Laser, nicht zuverlässig genau eingehalten werden. Der Erfindung liegt folglich die Aufgabe zugrunde, einen verbesserten Rotationslaser zum genauen und zuverlässigen senkrechten Ausrichten einer Laserfläche relativ zu einer Oberfläche bereitzustellen, wobei dieses Ausrichten schnell, einfach und benutzerfreundlich ermöglicht wird. Eine weitere spezielle Aufgabe der Erfindung ist es eine senkrechte Projektion einer Laserfläche relativ zu einer Oberfläche in vertikaler oder horizontaler Richtung zu erzeugen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Entsprechend der Erfindung weist ein Rotationslaser eine Laserstrahlquelle auf, aus welcher ein sichtbarer oder ein mittels eines Detektors nachweisbarer Laserstrahl emittiert wird. Dieser Laserstrahl wird unter Verwendung von motorisierten Umlenkmitteln wie z.B. Umlenkspiegeln abgelenkt und als Referenzstrahl verwendet, durch dessen Bewegung - verursacht durch jene Umlenklenkspiegel - ein Referenzpfad auf einer Oberfläche erzeugt wird. Zusätzlich sind Mittel zur Abstands- bzw. Entfernungsmessung zu Punkten auf der Oberfläche unter Verwendung des Referenzstrahls vorgesehen.

Mit dieser Anordnung wird der Referenzpfad auf eine Oberfläche projiziert, wobei durch den Referenzpfad eine Laserfläche definiert wird und dabei insbesondere eine Line auf der Oberfläche erzeugt wird. Zum Ausführen einer erfindungsgemässen Funktion zum Ausrichten der Laserfläche kann sich der Rotationslaser hierbei insbesondere in einer liegenden Position befinden, sodass sich die Projektion z.B. in einem Raum über Boden, Wände und Decke erstreckt, insbesondere wobei der Rotationslaser dafür derart positioniert sein kann, dass die Laserfläche vor Ausführen der Funktion bereits grob senkrecht relativ zur Wand ausgerichtet ist. Mit starten der Funktion wird die Laserfläche jetzt innerhalb eines Winkelbereichs über die Wand bewegt und damit die Neigung der Laserfläche relativ zur Oberfläche der Wand verändert. Währenddessen wird ein Abstand vom Rotationslaser zur jeweiligen Referenzlinie auf der Oberfläche fortlaufend gemessen. Das Neigen der Laserfläche kann durch ein Schwenken eines Teils des Rotationslasers, der die Umlenkmittel umfasst, erfolgen oder durch eine schwenkende Bewegung der Umlenkspiegel selbst. Zusätzlich können die jeweiligen Abstandsdaten und die Werte für die Winkelstellung der Umlenkmittel zu jeder Messung gespeichert und einander zugeordnet werden. Nachdem der Winkelbereich durchfahren ist werden die gespeicherten Abstände zur Referenzlinie miteinander verglichen und der geringste Abstandswert definiert. Anschliessend wird unter Verwendung der gespeicherten Winkelwerte die Laserebene bzw. eine Laserfläche so projiziert, dass diese durch jene Referenzlinie verläuft, für die der geringste Abstand bestimmt wurde. Dabei kann zusätzlich berücksichtigt werden, dass die Projektion nicht am Rand des vorher definierten Winkelbereichs verläuft sondern sich innerhalb der Grenzen des Winkelbereichs befindet. Mit der Erfüllung dieser Bedingung erhält man eine Projektion einer Laserlinie oder Laserfläche auf einer Wand, die relativ zu dieser senkrecht steht und damit den geringsten Abstand der Strahlungsquelle zur Wand aufweist.

Im Unterschied zu anderen bekannten Rotationslasern und deren Projektionsverfahren wird mit der vorliegenden Ausführung ein System bereitgestellt, mit welchem nicht nur eine vertikale oder horizontale Laserlinie auf eine Oberfläche projiziert werden kann, sondern die Projektion einer Laserfläche automatisch so ausgerichtet werden kann, dass sie - wie beschriebenen - senkrecht relativ zu der Oberfläche steht.

Mit der vorliegenden Erfindung kann das Ausrichten ausserdem zuverlässig und automatisiert erfolgen, wobei weiterhin die resultierende senkrechte Positionierung der Laserfläche relativ zur Oberfläche eine hohe Genauigkeit aufweist. Vorteilhaft ist zusätzlich, dass das Ausrichten einfach durchgeführt und eine hohe Benutzerfreundlichkeit erreicht werden kann, indem das Ausrichten beispielsweise auf Knopfdruck ausgeführt wird und darüber hinaus kaum weiteres Vorwissen nötig ist. Eine hohe Robustheit gegenüber äusseren Einflüssen ist darüber hinaus dadurch gegeben, dass die Ausrichtfunktion kontinuierlich erfolgen kann und damit z.B. Erschütterungen des Rotationslaser oder Stösse, die zu Änderungen der Ausrichtung des Lasers zur Oberfläche führen können, automatisch ausgeglichen werden. Die einfache und schnelle Wiederholbarkeit der automatisierten Ausrichtung ist ein weiterer Vorteil der Erfindung.

Zur Bestimmung der Referenzlinie mit dem geringsten Abstand zum Rotationslaser kann alternativ auf ein komplettes Durchfahren des Winkelbereichs und ein Vergleichen der dabei gemessenen Abstände teilweise verzichtet werden und dafür ein kontinuierliches Vergleichen der Abstände erfolgen, wobei beim Durchschreiten eines Abstandminimums, d.h. sobald die bisher abnehmenden Abstandswerte wieder zunehmen, der Vorgang unterbrochen und das somit festgestellte Minimum die Position der Referenzlinie mit dem geringsten Abstand zum Rotationslaser repräsentiert.

Das Schwenken der Laserfläche kann durch ein Laser-Core-Modul erfolgen, welches eine Laserstrahlquelle und drehbare Umlenkmittel zum Führen des Laserstrahls aufweist, wobei der Laserstrahl parallel zu einer Rotationsachse der Umlenkmittel gerichtet ist und beim Auftreffen auf das Umlenkmittel abgelenkt wird. Das komplette Modul ist zusätzlich um mindestens eine Achse schwenkbar relativ zum Gehäuse des Rotationslasers und erlaubt somit ein Ausrichten des emittierten Laserstrahls. Das Gehäuse des Rotationslasers verbleibt bei einer Schwenkbewegung des Moduls in seiner ursprünglichen Position.

Im Falle einer Positionierung des Rotationslasers derart, dass mit dem Durchfahren des Schwenkbereichs bzw. Winkelbereichs die kleinsten Abstände für Punkte auf der Grenze des Winkelbereichs bestimmt werden, kann der Rotationslaser auch durch ein Bewegen des Laser-Core-Moduls eine zusätzlich notwendige Grobjustierung vornehmen, sodass der abgefahrene Bereich auf der Wand verändert wird und nach der Justierung ein Bereich auf der Wand abgedeckt werden kann, welcher die Referenzlinie mit dem jeweils geringsten Abstand aufweist. Eine hierfür erforderliche Positionierung des Rotationslasers relativ zur Wand kann darüber hinaus - oder alternativ - auch manuell durchgeführt werden.

Weiterhin kann die Abstandsbestimmung der Referenzlinie auf unterschiedliche Arten durchgeführt werden. Zum einen kann ein relativer Abstand der einzelnen Referenzlinien zueinander bestimmt werden, indem für jede Linie der Abstand zu einem Punkt auf der Linie bestimmt wird, wobei die Lage des Punktes auf der Linie durch einen für alle Messungen gleich bleibenden Emissionswinkel des Laserstrahls bezüglich der Rotationsachse des Rotationslasers vorbestimmt ist und ein Schwenken einer Laserfläche in senkrechter Richtung relativ zu dieser erfolgt. Dadurch erhält man Abstandswerte, welche miteinander vergleichbar sind, mit welchen ein Abstandsminimum bestimmt werden kann und womit ein senkrechtes Ausrichten der Laserfläche relativ zur Oberfläche erfolgen kann. Die somit ermittelten Abstände entsprechen jedoch nicht den absoluten Abständen, d.h. den winkelabhängig geringsten Abständen, der Referenzlinien zum Rotationslaser. Zur Ermittlung dieser Absolutabstände können zunächst die Abstände zu mindestens zwei Punkten auf der Referenzlinie bei einem festgehaltenen Schwenkwinkel gemessen werden und aus den zugehörigen Emissionswinkeln und den gemessenen Abstandswerten der Verlauf der Referenzlinie abgeleitet werden. Ein Schwenken der Laserfläche in senkrechter Richtung zu dieser ist in diesem Fall nicht erforderlich. Die Bestimmung des absoluten Abstandes lässt sich dann mathematisch aus diesem Verlauf ableiten, indem eine Gerade, die senkrecht auf der Referenzlinie steht und durch den Rotationslaser verläuft, berechnet und die Strecke vom Laser zum Schnittpunkt der Geraden mit der Oberfläche bestimmt wird. Alternativ dazu kann eine grössere Anzahl von Abständen zu Punkten auf der Referenzlinie mit einer vorbestimmten Auflösung, wiederum für jeweils einen gemeinsamen festgehaltenen Schwenkwinkel, gemessen werden. Durch einen Vergleich dieser Abstände kann wiederum ein minimaler Abstandswert bestimmt werden, welcher einem Absolutabstand zur Referenzlinie entspricht. Bei einer hohen Auflösung von Messpunkten kann ein direktes Bestimmen des Punktes mit dem geringsten Abstand erfolgen, ist jedoch eine grobe Auflösung der Messpunkte vorgesehen, so kann der Minimalabstand durch ein Berechnen, z.B. mittels Ausgleichsrechnung bzw. Regression, einer die Abstände und Emissionswinkel repräsentierende Funktion bestimmt werden, indem ein Minimum dieser Funktion bestimmt wird.

Zur Verbesserung der Genauigkeit bei der Ausrichtung der Laserfläche können die Werte der Abstandsmessungen und ein dazu gehörigen Emissionswinkel der Laserfläche zum Rotationslaser miteinander verknüpft, angehäuft und aus diesen Mittelwerte abgeleitet werden, sodass die Positionen des Punktes mit dem kleinsten Abstand zur Wand bzw. zur Oberfläche genauer bestimmt werden kann.

In einer speziellen Ausführung kann an dem Rotationslaser ein Neigungssensor vorgesehen sein, damit die Referenzlinie parallel zum Schwerefeld der Erde geführt und in dieser Ausrichtung innerhalb des definierten Winkelbereichs bewegt werden kann. Unter dieser Voraussetzung wird jetzt wieder der Abstand zu einem festen Punkt auf dem Referenzpfad gemessen und gespeichert und nach der Bestimmung jenes Punktes mit dem kleinsten Abstand eine zum Schwerefeld parallele Referenzlinie bzw. Laserfläche durch diesen Punkt projiziert, die wiederum innerhalb der Grenzen des Winkelbereichs liegt, dadurch senkrecht relativ zur Wand projiziert ist und den kürzesten Abstand von der Strahlungsquelle zur Wand repräsentiert. Damit wird eine nicht nur relativ zur Oberfläche senkrechte, sondern auch vertikal verlaufende Laserfläche erzeugt.

Insbesondere kann eine Laserebene auch relativ zu zwei Oberflächen gleichzeitig ausgerichtet werden. Hierfür können beispielsweise zwei gegenüberliegende Wände ausgewählt werden, auf welche die Ebene projiziert wird und auf welchen jeweils der Abstand zu einer Referenzlinie, die jeweils durch die Laserebene definiert ist, bestimmt wird. Verlaufen diese Wände parallel zueinander, so kann die Laserebenen derart ausgerichtet werden, dass auf jeder Wand die Referenzlinie mit dem kleinsten Abstand zum Rotationslaser in der Ebene liegt und diese damit relativ zu beiden Wänden senkrecht steht. Weicht der Verlauf der beiden Wände aber von einer parallelen Ausrichtung ab, so können wiederum zu jeder Wand diejenige Referenzlinien ermittelt werden, welche die geringste Entfernung zum Rotationslaser haben, und entsprechende Neigungswinkel erfasst werden. Anschliessend kann die Laserebene so ausgerichtet werden, dass der Neigungswinkel der Ebene einem mittleren Neigungswinkel zwischen den zu den beiden Wänden bestimmten Winkeln entspricht. Auf diese Weise erhält man die Projektion einer Laserebene, die eine Art gemeinsame Ausgleichsebene zu beiden Wänden darstellt und dabei einen bestimmten Winkel ungleich 90° relativ zu den Wänden aufweist.

Weiterhin können die Positionen der Punkte oder der Verlauf des Referenzpfades in ein externes Koordinatensystem übertragen werden, wobei die Winkelstellungen der Umlenkmittel bzw. der Umlenkspiegel, die Neigung der Laserebene und des Rotationslasers und der Abstand zu einem Punkt bzw. zu allen Punkten auf dem Referenzpfad berücksichtig werden.

Zur Verdeutlichung werden im Folgenden Ausführungsformen des erfindungsgemässen Rotationslasers und des Verfahrens zur Ausrichtung der Laserfläche mit anderen Worten alternativ beschrieben.

Ein erfindungsgemässer Rotationslaser weist eine Quelle elektromagnetischer Strahlung, insbesondere eine Laserstrahlquelle, zur Erzeugung eines Referenzstrahls und um eine Rotationsachse drehbare Umlenkmittel zum rotierenden Aussenden des Referenzstrahls, wodurch eine Laserfläche definiert wird und wobei der Referenzstrahl einen Referenzpfad durchläuft und mindestens ein Teil des Referenzpfades als Referenzlinie visuell und/oder mittels eines Detektors auf einer Oberfläche wahrnehmbar ist. Weiter sind Schwenkmitteln zum Schwenken der Rotationsachse um mindestens eine Achse, insbesondere um zwei Achsen, und eine Entfernungsmesseinheit zum Messen von Entfernungen zu Punkten auf dem Referenzpfad vorgesehen. Zusätzlich weist der Rotationslaser Steuerungsmittel zur Steuerung der Schwenkmittel und zum Vergleichen von Entfernungen auf.

Erfindungsgemäss ist der Rotationslaser mit einer Funktionalität zum senkrechten Ausrichten der Laserfläche relativ zu der Oberfläche versehen, wobei die Steuerungsmittel derart ausgebildet sind, dass automatisch ein variierendes Neigen der Laserfläche relativ zur Oberfläche durch Schwenken der Rotationsachse erfolgt. Zu jeweiligen Neigungswinkeln erfolgt jeweils ein Bestimmen einer Referenzlinienentfernung der Referenzlinie zum Rotationslaser und weiter ein Bestimmen jenes Neigungswinkels der Laserfläche als Senkrecht-Neigungswinkel, bei welchem die Laserfläche die Referenzlinie mit der jeweils geringsten bestimmten Referenzlinienentfernung beinhaltet und damit senkrecht relativ zur Oberfläche steht.

Insbesondere kann im Rahmen der Funktionalität zusätzlich ein Einstellen des Neigungswinkels der Laserfläche auf den Senkrecht-Neigungswinkel erfolgen.

Insbesondere kann im Rahmen einer Weiterbildung der Funktionalität ein Ausrichten einer Laserfläche relativ zu einer ersten und einer der ersten gegenüberliegenden zweiten Oberfläche wie folgt erfolgt. Beim variierenden Neigen der Laserfläche werden Referenzlinienentfernungen zu auf der ersten und zweiten Oberfläche liegenden Referenzlinien bestimmt, für die erste und zweite Oberfläche erfolgt das Bestimmen zweier Neigungswinkel der Laserfläche als erster und zweiter Senkrecht-Neigungswinkel, bei welchen die Laserfläche jeweils eine erste und zweite Referenzlinie mit einer jeweils ersten und zweiten geringsten bestimmten Referenzlinienentfernung beinhaltet und damit senkrecht relativ zur ersten und/oder zweiten Oberfläche steht, und es erfolgt ein Einstellen des Neigungswinkels der Laserfläche auf einen mittleren, insbesondere arithmetisch gemittelten, Neigungswinkel zwischen dem ersten und zweiten Senkrecht-Neigungswinkel. Insbesondere können weiter die Neigungswinkel und die dabei jeweils bestimmten Referenzlinienentfernungen miteinander zu Wertepaaren verknüpft und in einer Datenbank, insbesondere in einer Tabelle, gespeichert werden. Ausserdem kann eine Entfernungsmessung im Rahmen der Erfindung zumindest mit Teilen des an der Oberfläche reflektierten Referenzstrahls erfolgen.

Darüber hinaus kann der Rotationslaser Mittel zum Bestimmen eines Emissionswinkels des Referenzstrahls anhand einer Stellung der Führungsmittel aufweisen. Zusätzlich können Messwerte für die Entfernungen zu Punkten in definierten Emissionswinkeln angehäuft und ein Durchschnittswert für gemessene Entfernungen ermittelt werden. Dadurch kann eine Steigerung der Genauigkeit bei der Bestimmung von Entfernungen zu Punkten erreicht werden und damit einhergehend ein Ausrichten der Laserebene exakter erfolgen. Erfindungsgemäss erfolgt das Bestimmen der Entfernung der Referenzlinie zum Rotationslaser durch ein Messen von Entfernungen und Bestimmen von Emissionswinkeln zu mindestens zwei Punkten auf der Referenzlinie. Zusätzlich wird dabei aus den Entfernungen und den Emissionswinkeln ein Verlauf der Referenzlinie abgeleitet und mathematisch eine kürzeste Strecke von Rotationslaser zu Referenzlinie berechnet, die als die Referenzlinienentfernung zum Rotationslaser berücksichtigt wird.

Insbesondere kann das Bestimmen der Entfernung der Referenzlinie zum Rotationslaser auch durch ein Messen von Entfernungen und Bestimmen von Emissionswinkeln zu einer Vielzahl von Punkten auf der Referenzlinie mit einer vorbestimmten Auflösung, insbesondere mit einer Auflösung von 5-50 Punkten pro 10° Winkeländerung der Umlenkmittel, erfolgen. Hierbei kann durch ein Vergleichen von Entfernungen zu den Punkten eine minimale Entfernung bestimmt werden, insbesondere wobei eine minimale Entfernung durch ein Berechnen eines Minimums einer die Entfernungen und Emissionswinkel repräsentierenden Funktion bestimmt wird, die als die Referenzlinienentfernung zum Rotationslaser berücksichtigt wird.

Ausserdem kann das variierende Neigen der Laserfläche für das Bestimmen der geringsten Referenzlinienentfernung zum Rotationslaser solange erfolgen, bis in einem Verlauf einer dabei aufgenommenen Messkurve ein Minimum festgestellt wird.

Weitergehend kann der Rotationslaser ein Laser-Core-Modul mit einer Laserstrahlquelle und mit den um die Rotationsachse drehbaren Umlenkmitteln, die als Führungsmittel für einen Laserstrahl vorgesehen sind, aufweisen, wobei der Laserstrahl parallel zur Rotationsachse emittiert und das Laser-Core-Modul um mindestens eine Achse, insbesondere um zwei Achsen, schwenkbar ist. Mit dieser Ausführungsform ist eine Grobausrichtung des Rotationslasers vor Ausführen der Funktionalität nicht erforderlich, sondern kann durch das bewegliche Modul durchgeführt werden.

Zusätzlich kann die Ausrichtung des Rotationslasers relativ zum Schwerefeld mit einem Neigungsmesser erfasst werden und die Laserfläche parallel zum Schwerefeld ausgerichtet werden. Diese beiden Schritte können vor Ausführung der Funktionalität erfolgen und bewirken eine vertikale Ausrichtung der Laserfläche und eine schliesslich senkrechte Ausrichtung relativ zur Oberfläche.

Bezüglich des Ausrichtens der Rotationsachse bzw. der Laserfläche kann erfindungsgemäss somit die Rotationsachse bzw. die Laserebene mittels der Schwenkmittel automatisch horizontal oder vertikal ausgerichtet werden, insbesondere wobei das horizontale oder vertikale Ausrichten der Rotationsachse in Abhängigkeit von einem Messwert eines Neigungssensors erfolgt.

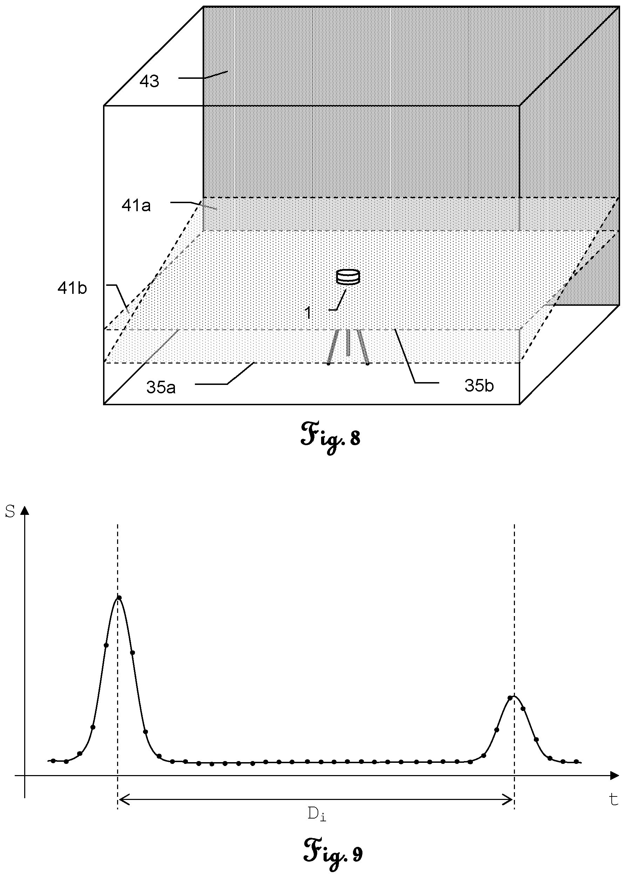

Die Entfernungsmessung mit dem erfindungsgemässen Rotationslaser betreffend kann erfindungsgemäss die Entfernungsmesseinheit eine Emissionseinheit und eine Empfangseinheit aufweisen und derart ausgebildet sein, dass zur Entfernungsmessung eine Emission und ein Empfangen eines Messstrahls in jeweils paralleler Richtung, insbesondere koaxial, erfolgen, insbesondere wobei die Entfernungsmessung mittels Wellenform-Digitalisierung (WFD; wie zu Figur 9 beschrieben) erfolgen kann.

Zusätzlich zu einer einen Referenzstrahl emittierenden Laserstrahlquelle kann eine zweite Strahlquelle ebenfalls zur Erzeugung einer Laserstrahlung vorgesehen sein, die dafür geeignet ist, insbesondere nach einer Reflexion von einer Oberfläche, von einem Empfänger detektiert zu werden und damit die Ermittelung einer Entfernung von Strahlquelle zu Oberfläche präzise durchführbar macht. Die beiden Strahlen können zudem gemeinsam, parallel zueinander versetz oder koaxial geführt werden, um eine Entfernungsmessung an jeweils dem Punkt durchführen zu können, der durch den Referenzstrahl definiert wird.

Ein weiterer Aspekt der Erfindung betrifft eine Projektion von Referenzlinien auf eine Oberfläche, wobei die Referenzlinien dabei so projiziert werden können, dass ein erster Abstand zwischen jeweils zwei benachbarten Linien gleich gross bzw. identisch mit einem zweiten Abstand von zwei anderen, benachbarten Linien ist. Ferner können der Abstand zwischen den Referenzlinien mittels einer definierten Variation des Neigungswinkels für die Rotationsachse bzw. die Laserfläche präzise eingestellt und somit parallel versetzte Linien erzeugt werden. Eine derartige Projektion basiert auf einem erfindungsgemässen senkrechten Ausrichten der Laserfläche zur Oberfläche und den dabei vorgenommenen Messungen bzw. ermittelten Messwerten (Winkeln und Entfernungen) an der Oberfläche. Aus der in diesem Zusammenhang erzeugbaren Verknüpfung von Entfernungsmesswerten und jeweiligen Neigungswinkeln kann die Projektion an definierter Position und mit bestimmten Abständen der Linien auf der Oberfläche erfolgen. Erfindungsgemäss kann dabei somit mindestens ein erster und ein zweiter Projektions-Neigungswinkel für die Neigung der Laserfläche derart einstellbar sein, dass ein definierter Abstand zwischen den bei den mindestens zwei Projektions-Neigungswinkeln auf der Oberfläche erzeugten Referenzlinien vorliegt, insbesondere wobei eine Vielzahl von Projektions-Neigungswinkeln einstellbar ist und die Abstände zwischen jeweils zwei benachbarten, dadurch auf der Oberfläche erzeugten Referenzlinien identisch bzw. gleich gross sind.

Ein erfindungsgemässes Verfahren zum senkrechten Ausrichten einer durch eine um eine Rotationsachse rotierendes Aussenden eines Referenzstrahls definierten Laserfläche relativ zu einer Oberfläche, wobei der Referenzstrahl einen Referenzpfade durchläuft und mindestens ein Teil als Referenzlinie visuell und/oder mittels eines Detektors auf der Oberfläche wahrnehmbar ist, weist ein variierendes Neigen der Laserfläche relativ zur Oberfläche, wobei zu jeweiligen Neigungswinkeln jeweils ein Bestimmen einer Referenzlinienentfernung der Referenzlinie zum Rotationslaser erfolgt, und ein Bestimmen jenes Neigungswinkels der Laserfläche als Senkrecht-Neigungswinkel, bei welchem die Laserfläche die Referenzlinie mit der jeweils geringsten bestimmten Referenzlinienentfernung beinhaltet und damit senkrecht relativ zur Oberfläche steht, auf.

Insbesondere erfolgt im erfindungsgemässen Verfahren ein Einstellen des Neigungswinkels der Laserfläche auf den Senkrecht-Neigungswinkel.

Weiterhin kann im Rahmen einer erfindungsgemässen Weiterbildung des Verfahrens ein Ausrichten einer Laserfläche relativ zu einer ersten und einer der ersten gegenüberliegenden zweiten Oberfläche erfolgt. Hierzu werden beim variierenden Neigen der Laserfläche Referenzlinienentfernungen zu auf der ersten und zweiten Oberfläche liegenden Referenzlinien bestimmt. Weiter erfolgt für die erste und zweite Oberfläche das Bestimmen zweier Neigungswinkel der Laserfläche als erster und zweiter Senkrecht-Neigungswinkel, bei welchen die Laserfläche jeweils eine erste und zweite Referenzlinie mit einer jeweils ersten und zweiten geringsten bestimmten Referenzlinienentfernungen beinhaltet und damit senkrecht relativ zur ersten und/oder zweiten Oberfläche (32) steht, und ein Einstellen des Neigungswinkels der Laserfläche auf einen mittleren, insbesondere arithmetisch gemittelten, Neigungswinkel zwischen dem ersten und zweiten Senkrecht-Neigungswinkel.

Zusätzlich kann vor dem senkrechten Ausrichten der Laserfläche die Laserfläche grob zur Oberfläche ausgerichtet werden und weiter ein Ausrichten der Laserfläche parallel oder senkrecht zum Schwerefeld, insbesondere horizontal oder vertikal, erfolgen. Dadurch kann zum einen eine insbesondere manuell durchzuführende Ausrichtung der Laserfläche im Laufe der Messung vermieden werden, zum anderen durch das parallele Ausrichten eine vertikale und eine senkrechte Projektion relativ zur Oberfläche der Laserfläche erfolgen.

Darüber hinaus kann eine absolute Position von mindestens einem Punkt, insbesondere von mehreren Punkten, auf dem Referenzpfad in Bezug zu einem externen Koordinatensystem bestimmt werden, wobei ein Emissionswinkel entsprechend einer Stellung einer zum Führen des Referenzstrahls vorgesehene Rotationsachse erfasst wird und die Entfernung zu diesem Punkt gemessen wird. Zusätzlich dazu können die Koordinaten des Punktes auf dem Referenzpfad in Bezug auf das externe Koordinatensystem bestimmt werden.

Den Aspekt des Bestimmens der Referenzlinienentfernung betreffend kann im Rahmen des erfindungsgemässen Verfahrens das Bestimmen einer Referenzlinienentfernung mittels eines Emittierens und eines Empfangens eines Messstrahls erfolgen, wobei das Emittieren und Empfangen in parallelen Richtungen, insbesondere koaxial, erfolgt, insbesondere wobei die Referenzlinienentfernung mittels Wellenform-Digitalisierung (WFD) bestimmt werden kann.

Gemäss einem weiteren Aspekt der Erfindung kann im Rahmen des Verfahrens mindestens ein erster und ein zweiter Projektions-Neigungswinkel als Neigungswinkel für die Laserfläche derart eingestellt werden, dass ein definierter Abstand zwischen den bei den mindestens zwei Projektions-Neigungswinkeln auf der Oberfläche erzeugten (insbesondere parallelen) Referenzlinien vorliegt, insbesondere wobei eine Vielzahl von Projektions-Neigungswinkeln eingestellt werden kann und die Abstände zwischen jeweils zwei benachbarten, dadurch auf der Oberfläche erzeugten Referenzlinien identisch bzw. gleich gross sind.

Insbesondere kann ein Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens zum senkrechten Ausrichten einer durch ein Führen eines Referenzstrahls entlang eines Referenzpfades definierten Laserfläche relativ zu einer Oberfläche ausgeführt werden, insbesondere wenn das Programm in einer elektronischen Datenverarbeitungseinheit eines Rotationslasers ausgeführt wird.

Das erfindungsgemässe Verfahren und der erfindungsgemässe Rotationslaser werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Ausführungsform eines erfindungsgemässen Rotationslasers,
- Fig. 2: einen erfindungsgemässen Rotationslaser mit einer Projektion einer Laserfläche auf eine Oberfläche,
- Fig. 3: einen Rotationslaser entsprechend der Erfindung mit Laserprojektion, wobei die Projektion senkrecht relativ zur Oberfläche ausgerichtet wird,
- Fig. 4: eine weitere Ausführungsform eines erfindungsgemässen Rotationslasers mit der Ausrichtung eines Laserstrahls zur Oberfläche,
- Fig. 5a-b: für die erfindungsgemässe Ausrichtung einer Laserfläche erfasste Messwerte für Entfernungen und Winkel in einer grafischen und tabellarischen Darstellung,
- Fig. 6a-b: einen erfindungsgemässen, eine Laserebene projizierenden Rotationslaser und eine grafische Darstellung von Messwerten entlang einer Referenzlinie,
- Fig. 7: einen erfindungsgemässen, eine Laserebene projizierenden Rotationslaser, wobei die Laserebene senkrecht relativ zur Oberfläche ausgerichtet wird, und
- Fig. 8: einen erfindungsgemässen Rotationslaser in aufrechter Position mit Projektionen von Laserebenen.
- Fig.9: eine schematische Darstellung einer typischen Signalfolge bei einem speziellen Entfernungsmessprinzip für einen erfindungsgemässen Rotationslaser.

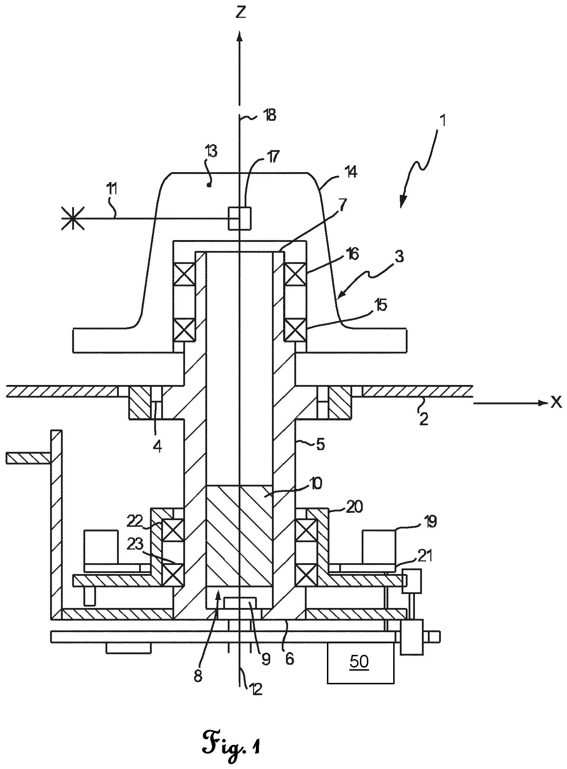

In Figur 1 wird ein Rotationslaser 1 entsprechend der vorliegenden Erfindung in einer Seitenansicht gezeigt. Der Rotationslaser 1 weist eine Basis 2 und eine Lasereinheit 3 zum Erzeugen einer Laserfläche auf, wobei die Lasereinheit 3 mittels einer Schwenkvorrichtung 4 schwenkbar zur Basis 2 gelagert ist. Die Schenkvorrichtung 4 ermöglicht der Lasereinheit 3 ein Schwenken um eine X- und eine Y-Achse (nicht gezeigt) und damit ein Schwenken in zwei Richtungen. Die Lasereinheit weist weiter eine Hohlachse 5, die in ihrem Mittelbereich mit der Schwenkvorrichtung 4 verbunden ist, auf. Die Achse hat eine unteres Ende 6 und ein oberes Ende 7. Eine Laserkollimatoreinheit 8 ist am unteren Ende 6 im Inneren der Hohlachse 5 vorgesehen. Die Laserkollimatoreinheit 8 kann weiterhin mindestens eine Laserstrahlquelle 9, z.B. eine Laserdiode, und einen Kollimator 10 aufweisen, wobei die Einheit 8 einen kollimierten Laserstrahl 11 parallel zur Hohlachse 5 entlang einer Mittenlinie 12 in Richtung eines Laserkopfes 13 erzeugt. Der Laserkopf 13 hat eine optisch transparente Haube 14, die mittels zweier Lager 15,16 rotierbar zur Hohlachse 5 angeordnet ist. Ein Umlenkmittel 17 in Form eines Prismas ist in die Haube 14 integriert, sodass die Richtung des Laserstrahls 11 um einen Winkel von 90° geändert wird. Dadurch dass das Umlenkmittel 17 mit der Haube 14 rotiert wird, wird eine Laserfläche erzeugt, in welcher der Laserstrahl 11 um eine Rotationsachse 18 rotiert. Die Rotationsachse 18 ist dabei konzentrisch zur Mittenlinie 12 der Hohlachse 5. Der Laserkopf 13 weist weiter einen Motor zum Rotieren der Haube 14 auf. Am unteren Ende 6 der Achse 5 ist ein Neigungssensor 19 vorgesehen. Der Neigungssensor 19 ist an einer Sensorplattform 20 mit einer Schaltung 21 angebracht. Die Sensorplattform 20 ist schwenkbar zur Achse 5 mit zwei Lagern 22, 23 ausgebildet. In einer speziellen Ausführung können zwei Neigungssensoren and er Plattform 20 vorgesehen sein, wobei ein Sensor die Neigung der Rotationsachse 18 zur X-Achse der andere die Neigung zur Y-Achse misst. Zusätzlich sind Steuerungsmittel 50 an dem Rotationslaser 1 angeordnet, welche zum Ausführen einer erfindungsgemässen Funktionalität zum Ausrichten einer Laserebene geeignet sind.

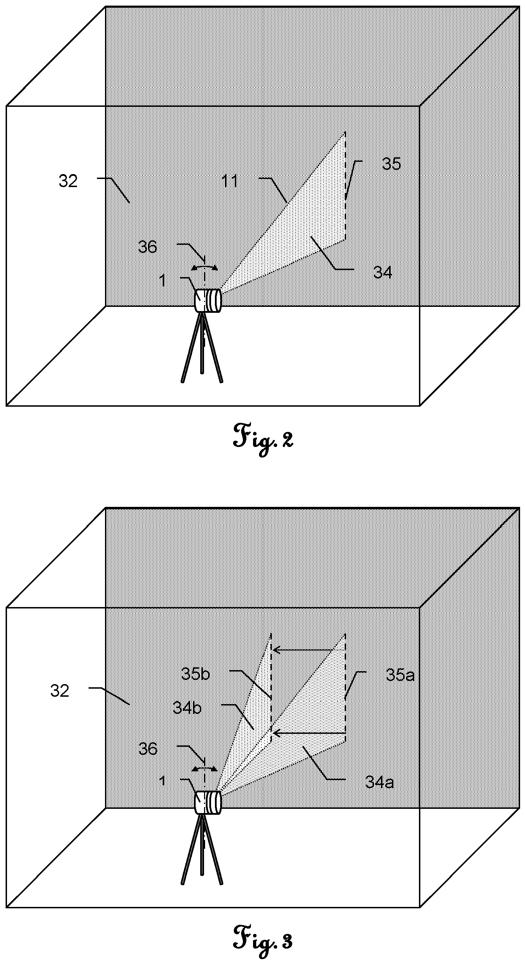

Figur 2 zeigt einen erfindungsgemässen Rotationslaser 1, welcher einen Laserstrahl 11 auf eine Oberfläche 32 projiziert, wobei der Rotationslaser 1 sich in einer um 90° gekippten, liegenden (lay-down) Position befindet. Der Laserstrahl 11 wird entlang eines Referenzpfades bewegt und definiert dadurch eine Laserfläche 34 und auf der Oberfläche 32 eine Referenzlinie 35. Die Laserfläche 34 kann weiterhin um eine Achse 36 geschwenkt und damit deren Neigung zur Oberfläche 32 variiert werden. Die Laserfläche 34 befindet sich hier in einer beliebigen Ausrichtung relativ zu der Oberfläche 32 und kann, wie in Figur 3 gezeigt, durch das Ausführen der erfindungsgemässen Funktionalität senkrecht relativ dazu ausgerichtet werden.

In Figur 3 wird ein erfindungsgemässer, eine Laserfläche 34a, 34b definierender Rotationslaser 1 ebenfalls in einem um 90° gekippten Zustand gezeigt. Die Laserfläche 34a befindet sich in einer relativ zur Oberfläche 32 unbestimmten Neigung und definiert dabei eine Referenzlinie 35a. Erfindungsgemäss wird die Laserfläche 34a durch das Ausführen einer Funktionalität so zur Oberfläche 32 ausgerichtet, dass die Laserfläche 34b senkrecht relativ zur Oberfläche 32 steht. Hierfür kann die Laserfläche 34a, 34b automatisch in einem Schwenkbereich durch Schwenken um eine Achse 36 über die Oberfläche 32 geführt und dabei die Entfernung zu der Referenzlinie 35a, 35b, eine Referenzlinienentfernung, gemessen werden. Die ermittelten Referenzlinienentfernung werden miteinander verglichen und dadurch diejenige Entfernung abgeleitet, welche den geringsten Abstand von Oberfläche 32 zu Rotationslaser 1 aufweist. In der gezeigten Ausrichtung der Laserfläche 34b ist eine gemessene Entfernung vom Rotationslaser 1 zu einer Referenzlinie 35b auf der Oberfläche 32 am geringsten. Bei einer Projektion der Laserfläche 34b derart, dass die Referenzlinie 35b in der die Laserfläche beinhaltenden Ebene liegt, folgt somit, dass die Laserfläche 34b senkrecht auf der Oberfläche 32 steht.

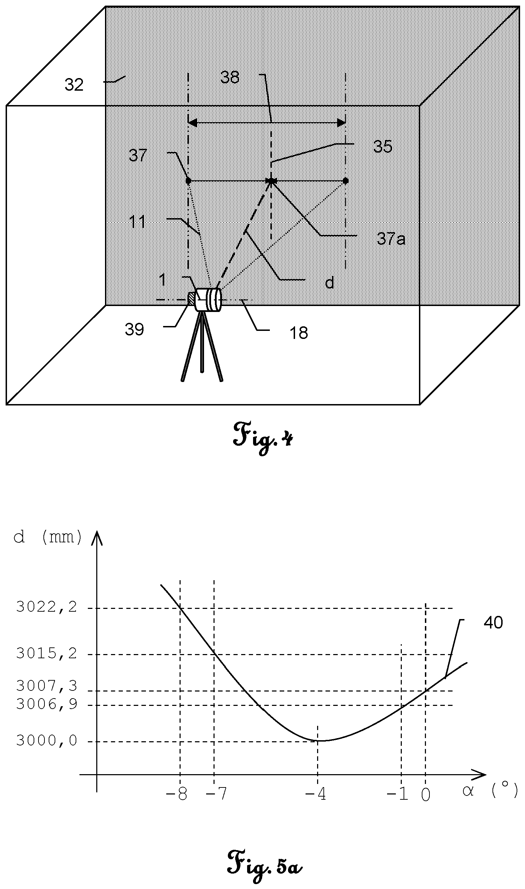

Zur Verdeutlichung der erfindungsgemässen Ausrichtungsfunktionalität ist in Figur 4 eine Bestimmung einer Position für eine senkrecht ausgerichtete Laserfläche gezeigt. Der Rotationslaser 1 kann hierfür wiederum einen Laserstrahl 11 als Referenzstrahl emittieren, wobei dieser durch ein Ablenken mithilfe von bewegten Umlenkmitteln eine Laserfläche und damit auf der Oberfläche 32 eine Referenzlinie 35 definieren kann. Auf dieser Referenzlinie 35 kann die Entfernung d zu einem Punkt 37 fortlaufend gemessen werden, wobei die Lage des Punktes 37 auf der Referenzlinie durch einen für alle Messungen gleich bleibenden Emissionswinkel des Laserstrahls 11 bezüglich der Rotationsachse 18 des Rotationslasers 1 vorbestimmt ist und beibehalten wird. Der Laserstrahl 11 wird dabei in einem Schwenkbereich 38 in senkrechter Richtung zur Referenzlinie geschwenkt. Nach Durchfahren des Schwenkbereichs 38 kann die Position für den Punkt 37a mit der geringsten gemessenen Entfernung d bestimmt werden und der Laserstrahl 11 auf diesen ausgerichtet werden bzw. eine Laserfläche auf die Oberfläche 32 projiziert werden, sodass diese den Punkt 37a beinhaltet und damit senkrecht auf der Oberfläche 32 steht. Ausserdem kann der Rotationslaser 1 über einen Neigungssensor 39 verfügen und durch diesen eine Information über die Lage des Rotationslaser 1 verarbeiten. Mit einer Ausrichtung der Referenzlinie 35 parallel zum Schwerefeld der Erde kann eine sowohl relativ zur Oberfläche 32 senkrechte als auch, insbesondere gleichzeitig, eine vertikale Projektion einer Referenzlinie 35 bzw. einer Laserfläche erfolgen.

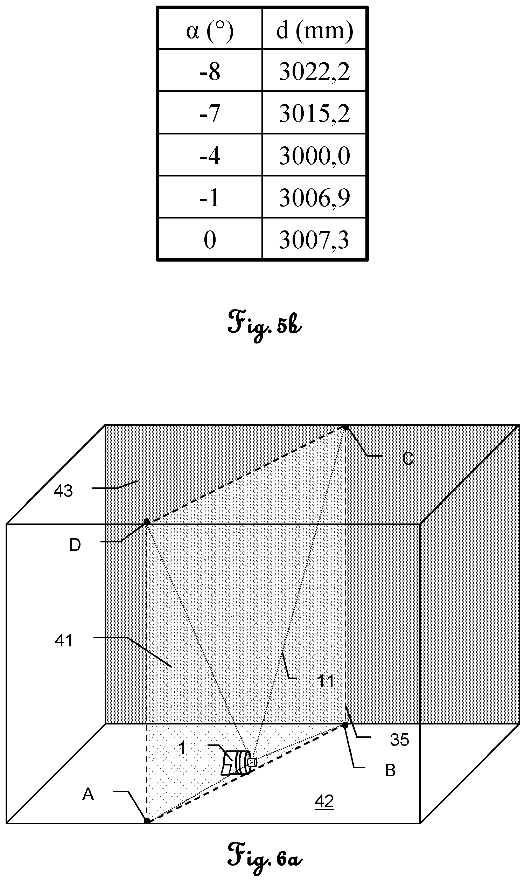

Die Figuren 5a und 5b zeigen den Verlauf einer erfindungsgemässen Bestimmung einer senkrechten Ausrichtung einer Laserfläche anhand von Messwerten zu einem auf einer Referenzlinie anhand eines vorbestimmten Emissionswinkels definierten Punkts. In der Figur 5a ist eine Messkurve 40 dargestellt, deren Verlauf sich aus erfassten Entfernungen d und Schwenkwinkeln α beim Schwenken der Laserfläche ergibt. Die Entfernungen können in unterschiedlichen Intervallen z.B. abhängig von der Winkeländerung - hier in 1° Schritten - erfasst und den jeweiligen Winkeln α zugeordnet werden. Durch die gezeigte Kurve lässt sich in diesem Beispiel sehr schnell die Winkelstellung für den Punkt mit der kleinsten gemessenen Entfernung d bestimmen. Der Rotationslaser kann einen Schwenkbereich von z.B. ±10° durchfahren, wobei hier nur ein Ausschnitt des Bereichs von -8° bis 0° dargestellt ist. Die Entfernung d vom Rotationslaser zur Oberfläche beträgt in einem Winkel α von -8° 3022,2mm, nimmt bei -7° ab auf 3015,2mm und erreicht bei -4° ein Minimum von 3000mm. Bei einer weiteren Auslenkung des Lasers bis zu 0° steigen die gemessenen Entfernungen d wieder bis auf 3007,3mm an. Der geringste Abstand wird somit bei einer Winkelstellung von - 4° mit 3000mm erfasst. In diesem Winkel α relativ zum Rotationslaser kann nun eine Laserfläche emittiert und auf die Oberfläche ausgerichtet werden, die senkrecht relativ zur Oberfläche stehen kann. Die geringste Entfernung d kann auch dadurch bestimmt werden, dass während der Aufnahme der Messkurve 40 eine Minimum in deren Verlauf festgestellt wird, z.B. bei einer Zunahme der gemessenen Entfernungen d nachdem die Werte bisher eine Abnahme der Entfernung d gezeigt haben, und ein Schwenken der Laserfläche danach abgebrochen wird. Das gefundene Minimum kann dann die geringste Entfernung d des Punktes auf der Referenzlinie zum Rotationslaser in Abhängigkeit der Winkelstellung der Laserfläche repräsentieren. Die erfassten Messwerte können weiter in einer Tabelle, wie in Figur 5b gezeigt, gespeichert und einander zugeordnet werden. Dadurch kann z.B. nach einer Auswahl einer bestimmten Entfernung d der entsprechende Winkel α schnell angefahren und die zugehörige Position auf einer Wand markiert werden.

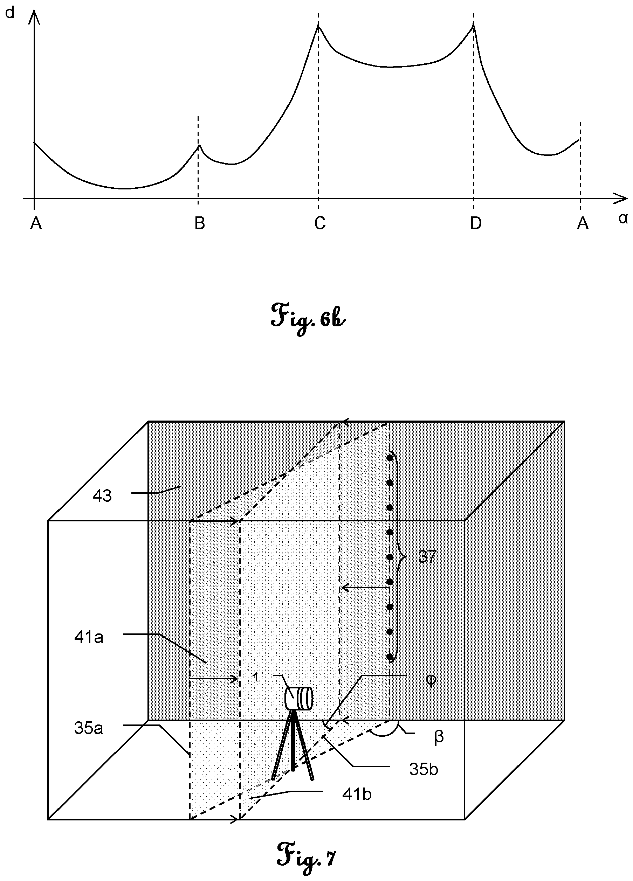

In Figur 6a ist ein erfindungsgemässer Rotationslaser 1 in einem Raum 42 gezeigt, der im Unterschied zu den vorher dargestellten Ausführungen mittels eines rotierenden Laserstrahls 11 eine Laserebene 41 definiert. Die Laserebene 41 trifft dabei auf Boden, Decke und Wand 43 des Raumes 42 auf und erzeugt damit eine durchgehende Referenzlinie 35. Weiter sind die Schnittpunkte A, B, C, D der Referenzlinie 35 mit den Kanten des Raumes 42 dargestellt. Die gezeigte Laserebene 41 befindet sich in einer unbestimmten Ausrichtung relativ zu der Wand 43. Das erfindungsgemässe senkrechte Ausrichten einer derartigen Laserebene 42 relativ zu der Wand 43 ist in Figur 7 dargestellt.

Figur 6b zeigt den Verlauf einer Entfernungsmessung entlang einer Referenzlinie aus Figur 6a. Die Winkelstellung der Rotationsachse des Rotationslasers wird durch die Eckpunkte A, B, C, D der Referenzlinie repräsentiert. Mit Hilfe dieser Darstellung kann einem Benutzer eines erfindungsgemässen Rotationslasers eine Auswahlmöglichkeit, eine Laserfläche bezüglich einer gewünschten Fläche auszurichten, bereitgestellt werden. Z.B. kann der Benutzer den Bereich zwischen den Punkten B und C auswählen und somit die Ausrichtung senkrecht relativ zu der Wand 43 in Figur 6a vornehmen. Zusätzlich kann der Benutzer auch zwei Bereiche auswählen, z.B. den Bereich zwischen Punkt B und C und den Bereich zwischen Punkt D und A, insbesondere die Bereiche für zwei Wände, die sich parallel gegenüberliegen. Anschliessend kann die Laserebene derart ausgerichtet werden, dass diese relativ zu den beiden parallelen Wänden senkrecht steht. Bei nicht parallelen Wänden erfolgt ein Ausrichten der Laserebene so, dass die Referenzlinie der Laserebene auf beiden Wänden einen gleichen Abstand zu jeweils der Referenzlinie mit der geringsten Entfernung zum Rotationslaser aufweist.

Figur 7 zeigt eine weitere Ausführung eines erfindungsgemässen Rotationslasers 1 mit einer aufgespannten Laserebene 41a, 41b und einer jeweils durchgehenden Referenzlinie 35a, 35b. Die Laserebene 41a mit der erzeugten Referenzlinie 35a wird auf die Wand 43 in einem vorher unbestimmten Winkel β relativ zur Wand 43 gerichtet. Unter Verwendung der Funktionalität zum Ausrichten von Laserflächen wird die Laserebene 41b unter einem 90° Winkel ϕ relativ zur Wand 43 ausgerichtet und steht somit senkrecht auf dieser. Zum Ausrichten der Laserebene 41a kann die Entfernung von Rotationslaser 1 zur Referenzlinie 35a auf unterschiedliche Arten bestimmt und in Abhängigkeit der Neigung der Laserebenen 41a, 41b relativ zur Wand 43 miteinander verglichen werden. Z.B. werden die Entfernungen zu Punkten 37 auf der Referenzlinie 35a mit einer vorbestimmten Auflösung gemessen und durch ein Vergleichen der Entfernungen ein Minimalwert bestimmt, der der Entfernung zur Referenzlinie 35a entspricht. Alternativ dazu können auch die Entfernungen zu nur zwei Punkten 37 bestimmt werden, ein Verlauf der Referenzlinie 35a aus der Winkelstellung der Rotationsachse des Rotationslasers 1 und den Entfernungen abgeleitet werden und daraus mathematisch ein senkrechter Abstand zum Rotationslaser berechnet werden, welcher der Entfernung zur Referenzlinie 35a entspricht.

In Figur 8 ist ein erfindungsgemässer Rotationslaser 1 gezeigt, der in einer aufrechten Position betrieben wird. Eine Laserebene 41a wird in einem unbestimmten Winkel relativ zur Wand 43 durch den Rotationslaser definiert und erzeugt eine Referenzlinie 35a. Nach der Ausführung der Funktionalität zum Ausrichten von Laserflächen bzw. Laserebenen 41a, 41b entsprechend der Erfindung wird die Laserebene 41b senkrecht relativ zur Wand 43 projiziert. Insbesondere kann somit ein senkrechtes, insbesondere horizontales, Ausrichten von Laserebenen 41a, 41b in Räumen erfolgen, um z.B. eine Markierung in Form einer Referenzlinie 35a, 35b an Wänden 43 zur Orientierungshilfe bei Baumassnahmen zu erzeugen.

Figur 9 erläutert ein spezielles Entfernungsmessprinzip, nämlich ein Verfahren der Wellenform-Digitalisierung (WFD = wave form digitiser), für einen erfindungsgemässen Rotationslaser anhand einer schematischen Darstellung einer typischen Signalfolge wie sie dabei in einem elektronischen Entfernungsmesseinheit auftritt. Dargestellt wird der Signalverlauf gegenüber der Zeitachse, wobei die Punkte Abtast- bzw. Samplingpunkte kennzeichnen. Der linke Puls stellt hierbei einen Start- und der rechte Puls einen Stoppimpuls dar. Die Laufzeit und damit die Distanz Di folgen beispielsweise aus dem zeitlichen Abstand der Scheitelpunkte der beiden Pulse, wobei die Pulse ähnlich wie bei Phasenmessern digital abgetastet werden. Die Lösung basiert dabei auf der Kombination von zwei in der Entfernungsmessung übliche Grundprinzipien zur Signaldetektion. Das erste Grundprinzip basiert auf der Messsignaldetektion anhand der Schwellwertmethode und das zweite Grundprinzip auf der Signalabtastung mit nachgeschalteter Signalverarbeitung zur Identifikation und zeitlichen Lagebestimmung des Signals. Bei der Schwellwertmethode wird zumeist die Signaldetektion durch das Überschreiten der Signalamplitude über einen Schwellwert festgelegt, das distanzbestimmende Signalmerkmal kann jedoch in unterschiedlichen Formen vorliegen. Einerseits kann die ansteigende Flanke des Empfangssignals einen Zeittrigger auslösen, anderseits kann das Empfangssignal mittels eines elektronischen Filters in eine andere geeignete Form umgewandelt werden, um ein Triggermerkmal zu generieren, welches vorteilhafterweise unabhängig von der Impulsamplitude ist. Das entsprechende Triggersignal wird als Start- oder Stoppsignal einer Zeitmessschaltung zugeführt. Beide Ansätze werden parallel zur Signaldetektion angewendet, d.h., dass ein empfangener Puls bzw. eine Signalstruktur mit beiden Verfahren detektiert wird, was zumeist Gleichzeitigkeit oder zumindest zeitliche Überlappung der Verfahren impliziert.

Kern des Prinzips ist eine verlustfreie Signalerfassung, wobei verlustfrei im Sinne der Erhaltung der Laufzeitinformation zu verstehen ist. Der Ansatz basiert dabei auf der Direktsignalabtastung des empfangenen Zeitsignals im GHz-Bereich. Im dargestellten Signalverlauf sind die Abtastpunkte im Wesentlichen äquidistant (bezüglich der Zeitachse) verteilt, wobei die Abstände mit einer Genauigkeit von weniger als 5 psec eingehalten werden können. Der Impuls kann von einer Sendeeinheit zum zu vermessenden Zielobjekt gelenkt und über eine Empfangsoptik auf einen Photodetektor geleitet werden. Das dadurch entstehende Zeitsignal enthält wenigstens einen Startimpuls und jedem optisch angestrahlten Target entsprechend einen Stoppimpuls.

Im Rahmen einer Signalanalyse wird die Zeitachse, beziehungsweise der digitale Signalvektor, nach einem Startpuls und allfälligen Stopppulsen abgesucht. Die Position der Pulse ist damit auf ein Abtastintervall genau bekannt. Die Differenz der Pulspositionen entspricht dabei einer ersten Grobschätzung der zu ermittelnden Distanz Di. Zur Verbesserung der Messgenauigkeit sind verschiedene hardware- und software-seitige Verfahren bekannt. Beispielsweise ist mittels Schwerpunktauswertung der beiden Impulse Interpolation bis zu typischerweise einem Hundertstel des Zeitintervalls möglich. Weitere Methoden sind Digitale-Fourier-Transformation (DFT) mit Phasenauswertung oder Differenzierung mit Nulldurchgangsbestimmung. Vorzugsweise werden Auswertmethoden verwendet, die gegenüber Signalverzerrung und Sättigung robust sind. Hier werden oft Ansätze aus der digitalen Filter- und Schätztheorie angewandt. Mit solchen Methoden sind z.B. 1 mm-Messgenauigkeiten erreichbar.

## Patentansprüche

1. Rotationslaser (1) mit:
• einer Quelle elektromagnetischer Strahlung (9), insbesondere einer Laserstrahlquelle, zur Erzeugung eines Referenzstrahls (11),
• um eine Rotationsachse (18) drehbaren
Umlenkmitteln (17) zur rotierenden Aussendung des Referenzstrahls (11), wodurch eine
Laserfläche (34, 34a, 34b) definiert wird und wobei der Referenzstrahl (11) einen Referenzpfad durchläuft und mindestens ein Teil des Referenzpfades als Referenzlinie (35, 35a, 35b) visuell und/oder mittels eines Detektors auf einer Oberfläche (32) wahrnehmbar ist,
• Schwenkmitteln zum Schwenken der Rotationsachse (18) um mindestens eine Schwenkachse, insbesondere um zwei Schwenkachsen,
• einer Entfernungsmesseinheit zum Messen von Entfernungen (d) zu Punkten auf dem Referenzpfad, und
• Steuerungsmitteln zur Steuerung der Schwenkmittel und zum Vergleichen von Entfernungen (d),
**dadurch gekennzeichnet, dass**
der Rotationslaser (1) eine Funktionalität zum senkrechten Ausrichten der Laserfläche (34, 34a, 34b) relativ zu der Oberfläche (32) aufweist, wobei die Steuerungsmittel derart ausgebildet sind, dass automatisch die folgenden Schritte erfolgen:
• variierendes Neigen der Laserfläche (34, 34a, 34b) relativ zur Oberfläche (32) durch Schwenken der Rotationsachse (18), wobei durch Heranziehen von auf der Referenzlinie gemessenen Punkten (37, 37a) zu jeweiligen Neigungswinkeln jeweils ein Bestimmen einer Referenzlinienentfernung der
Referenzlinie (35, 35a, 35b) zum Rotationslaser (1) erfolgt,
• Bestimmen jenes Neigungswinkels der
Laserfläche (34, 34a, 34b) als Senkrecht-Neigungswinkel, bei welchem die
Laserfläche (34, 34a, 34b) die
Referenzlinie (35, 35a, 35b) mit geringster Referenzlinienentfernung beinhaltet und damit senkrecht relativ zur Oberfläche (32) steht.

2. Rotationslaser (1) nach Anspruch 1,
**dadurch gekennzeichnet, dass**
im Rahmen der Funktionalität zusätzlich folgender Schritt erfolgt:
Einstellen des Neigungswinkels der
Laserfläche (34, 34a, 34b) auf den Senkrecht-Neigungswinkel,
oder
im Rahmen der Funktionalität ein Ausrichten einer Laserfläche (34, 34a, 34b) relativ zu einer ersten und einer der ersten gegenüberliegenden zweiten Oberfläche (32) mit folgenden Schritten erfolgt:
• beim variierenden Neigen der
Laserfläche (34, 34a, 34b) Referenzlinienentfernungen zu auf der ersten und zweiten Oberfläche (32) liegenden Referenzlinien (35, 35a, 35b) bestimmt werden,
• für die erste und zweite Oberfläche (32) erfolgt das Bestimmen zweier Neigungswinkel der
Laserfläche (34, 34a, 34b) als erster und zweiter Senkrecht-Neigungswinkel, bei welchen die
Laserfläche (34, 34a, 34b) jeweils eine erste und zweite Referenzlinie (35, 35a, 35b) mit einer jeweils ersten und zweiten geringsten Referenzlinienentfernung beinhaltet und damit senkrecht relativ zur ersten und/oder zweiten Oberfläche (32) steht, und
• Einstellen des Neigungswinkels der
Laserfläche (34, 34a, 34b) auf einen mittleren, insbesondere arithmetisch gemittelten, Neigungswinkel zwischen dem ersten und zweiten Senkrecht-Neigungswinkel.

3. Rotationslaser (1) nach Anspruch 1 oder 2,
**dadurch gekennzeichnet, dass**
die Neigungswinkel und die dabei jeweils bestimmten Referenzlinienentfernungen miteinander zu Wertepaaren verknüpft und in einer Datenbank, insbesondere in einer Tabelle, gespeichert werden, insbesondere wobei die Entfernungsmessung zumindest mit Teilen des an der Oberfläche (32) reflektierten Referenzstrahls (11) erfolgt,
und/oder
der Rotationslaser (1) Mittel zum Bestimmen eines Emissionswinkels des Referenzstrahls (11) anhand einer Drehstellung der Umlenkmittel (17) aufweist und Messwerte für Entfernungen (d) zu Punkten (37, 37a) in definierten Emissionswinkeln angehäuft werden und ein Durchschnittswert für gemessene Entfernungen (d) ermittelt wird.

4. Rotationslaser (1) nach einem der vorangehenden Ansprüche,
**dadurch gekennzeichnet, dass**
das Bestimmen der Referenzlinienentfernung zum Rotationslaser (1) erfolgt durch ein Messen von Entfernungen (d) und Bestimmen von Emissionswinkeln zu
• mindestens zwei Punkten (37, 37a) auf der Referenzlinie (35, 35a, 35b), wobei aus den Entfernungen (d) und den Emissionswinkeln ein Verlauf der Referenzlinie (35, 35a, 35b) abgeleitet und mathematische eine kürzeste Strecke von Rotationslaser (1) zu Referenzlinie (35, 35a, 35b) berechnet wird, die als die Referenzlinienentfernung zum Rotationslaser (1) berücksichtigt wird, und/oder
• einer Vielzahl von Punkten (37, 37a) auf der Referenzlinie (35, 35a, 35b) mit einer vorbestimmten Auflösung, insbesondere mit einer Auflösung von 5-50 Punkten pro 10° Winkeländerung der Umlenkmittel, wobei durch ein Vergleichen von Entfernungen (d) zu den Punkten (37, 37a) eine minimale Entfernung (d) bestimmt wird, insbesondere wobei eine minimale Entfernung (d) durch ein Berechnen eines Minimums einer die Entfernungen (d) und Emissionswinkel repräsentierenden Funktion bestimmt wird, die als die Referenzlinienentfernung zum Rotationslaser (1) berücksichtigt wird.

5. Rotationslaser (1) nach einem der vorangehenden Ansprüche,
**dadurch gekennzeichnet, dass**
das variierende Neigen der Laserfläche (34, 34a, 34b) für das Bestimmen der geringsten Referenzlinienentfernung zum Rotationslaser (1) solange erfolgt, bis in einem Verlauf einer dabei aufgenommenen Messkurve (40) ein Minimum festgestellt wird,
und/oder
der Rotationslaser (1) ein Laser-Core-Modul mit einer Laserstrahlquelle (9) und mit den um die Rotationsachse (18) drehbaren Umlenkmitteln (17), die als Führungsmittel für einen Laserstrahl vorgesehen sind, aufweist, wobei der Laserstrahl (11) parallel zur Rotationsachse emittiert und das Laser-Core-Modul um mindestens eine Achse (36), insbesondere um zwei Achsen, schwenkbar ist.

6. Rotationslaser (1) nach einem der vorangehenden Ansprüche,
**dadurch gekennzeichnet, dass**
die Entfernungsmesseinheit eine Emissionseinheit und eine Empfangseinheit aufweist und derart ausgebildet ist, dass zur Entfernungsmessung eine Emission und ein Empfangen eines Messstrahls in paralleler Richtung, insbesondere koaxial, erfolgt, insbesondere wobei die Entfernungsmessung mittels Wellenform-Digitalisierung erfolgt.

7. Rotationslaser (1) nach einem der vorangehenden Ansprüche,
**dadurch gekennzeichnet, dass**
die Rotationsachse (18) mittels der Schwenkmittel automatisch horizontal oder vertikal ausrichtbar ist, insbesondere wobei die Rotationsachse (18) in Abhängigkeit von einem Messwert eines Neigungssensors (19, 39) horizontal oder vertikal ausrichtbar ist.

8. Rotationslaser (1) nach einem der vorangehenden Ansprüche,
**dadurch gekennzeichnet, dass**
mindestens ein erster und ein zweiter Projektions-Neigungswinkel als Neigungswinkel für die Laserfläche (34, 34a, 34b) derart einstellbar sind,
dass ein definierter Abstand zwischen den bei den mindestens zwei Projektions-Neigungswinkeln auf der Oberfläche erzeugten Referenzlinien (35, 35a, 35b) vorliegt, insbesondere wobei eine Vielzahl von Projektions-Neigungswinkeln einstellbar ist und die Abstände zwischen jeweils zwei benachbarten, dadurch auf der Oberfläche erzeugten
Referenzlinien (35, 35a, 35b) identisch sind.

9. Verfahren zum senkrechten Ausrichten einer durch ein um eine Rotationsachse (18) rotierendes Aussenden eines Referenzstrahls (11) definierten
Laserfläche (34, 34a, 34b) relativ zu einer Oberfläche (32), wobei der Referenzstrahl (11) einen Referenzpfad durchläuft und mindestens ein Teil als Referenzlinie (35, 35a, 35b) visuell und/oder mittels eines Detektors auf der Oberfläche (32) wahrnehmbar ist,
**dadurch gekennzeichnet, dass**
folgende Schritte erfolgen:
• variierendes Neigen der Laserfläche (34, 34a, 34b) relativ zur Oberfläche (32), wobei durch Heranziehen von auf der Referenzlinie gemessenen Punkten (37, 37a) zu jeweiligen Neigungswinkeln jeweils ein Bestimmen einer Referenzlinienentfernung der Referenzlinie (35, 35a, 35b) zum
Rotationslaser (1) erfolgt, und
• Bestimmen jenes Neigungswinkels der
Laserfläche (34, 34a, 34b) als Senkrecht-Neigungswinkel, bei welchem die
Laserfläche (34, 34a, 34b) die
Referenzlinie (35, 35a, 35b) mit geringster Referenzlinienentfernung beinhaltet und damit senkrecht relativ zur Oberfläche (32) steht.

10. Verfahren nach Anspruch 9, **dadurch gekennzeichnet, dass**
das Verfahren folgenden zusätzlichen Schritt aufweist:
Einstellen des Neigungswinkels der
Laserfläche (34, 34a, 34b) auf den Senkrecht-Neigungswinkel,
oder
im Rahmen einer Weiterbildung des Verfahrens ein Ausrichten einer Laserfläche (34, 34a, 34b) relativ zu einer ersten und einer der ersten gegenüberliegenden zweiten Oberfläche (32) mit folgenden Schritten erfolgt:
• beim variierenden Neigen der
Laserfläche (34, 34a, 34b) Referenzlinienentfernungen zu auf der ersten und zweiten Oberfläche (32) liegenden Referenzlinien (35, 35a, 35b) bestimmt werden,
• für die erste und zweite Oberfläche (32) erfolgt das Bestimmen zweier Neigungswinkel der
Laserfläche (34, 34a, 34b) als erster und zweiter Senkrecht-Neigungswinkel, bei welchen die Laserfläche (34, 34a, 34b) jeweils eine erste und zweite Referenzlinie (35, 35a, 35b) mit einer jeweils ersten und zweiten geringsten Referenzlinienentfernungen beinhaltet und damit senkrecht relativ zur ersten und/oder zweiten Oberfläche (32) steht, und
• Einstellen des Neigungswinkels der
Laserfläche (34, 34a, 34b) auf einen mittleren, insbesondere arithmetisch gemittelten, Neigungswinkel zwischen dem ersten und zweiten Senkrecht-Neigungswinkel.

11. Verfahren nach Anspruch 9 oder 10, **dadurch gekennzeichnet, dass**
vor dem senkrechten Ausrichten der
Laserfläche (34, 34a, 34b) die
Laserfläche (34, 34a, 34b) grob senkrecht zur Oberfläche (32) ausgerichtet wird, insbesondere wobei ein Ausrichten der Laserfläche (34, 34a, 34b) parallel oder senkrecht zum Schwerefeld erfolgt, insbesondere horizontal oder vertikal.

12. Verfahren einem der Ansprüche 9-11,
**dadurch gekennzeichnet, dass** eine absolute Position von mindestens einem
Punkt (37, 37a), insbesondere von mehreren
Punkten (37, 37a), auf dem Referenzpfad in Bezug zu einem externen Koordinatensystem bestimmt wird, wobei ein Emissionswinkel entsprechend einer Stellung einer zum Führen des Referenzstrahls (11) vorgesehene Rotationsachse (18) erfasst wird und die Entfernung (d) zu diesem Punkt (37, 37a) gemessen wird, insbesondere wobei die Koordinaten des Punktes (37, 37a) in Bezug auf das externe Koordinatensystem auf dem Referenzpfad bestimmt werden.

13. Verfahren nach einem der Ansprüche 9 bis 12,
**dadurch gekennzeichnet, dass**
das Bestimmen einer Referenzlinienentfernung mittels eines Emittierens und eines Empfangens eines Messstrahls erfolgt, wobei das Emittieren und Empfangen in parallelen Richtungen, insbesondere koaxial, erfolgt, insbesondere wobei die Referenzlinienentfernung mittels Wellenform-Digitalisieren bestimmt wird.

14. Verfahren nach einem der Ansprüche 9 bis 13,
**dadurch gekennzeichnet, dass**
mindestens ein erster und ein zweiter Projektions-Neigungswinkel als Neigungswinkel für die Laserfläche (34, 34a, 34b) derart eingestellt werden, dass ein definierter Abstand zwischen den bei den mindestens zwei Projektions-Neigungswinkeln auf der Oberfläche erzeugten Referenzlinien (35, 35a, 35b) vorliegt, insbesondere wobei eine Vielzahl von Projektions-Neigungswinkeln eingestellt wird und die Abstände zwischen jeweils zwei benachbarten, dadurch auf der Oberfläche erzeugten
Referenzlinien (35, 35a, 35b) identisch sind.

15. Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens nach einem der Ansprüche 9 bis 14, insbesondere wenn das Programm in einer elektronischen Datenverarbeitungseinheit eines Rotationslasers ausgeführt wird.

## Claims

1. A rotating laser (1) having:
• a source of electromagnetic radiation (9), in particular a laser beam source, for generating a reference beam (11),
• deflection means (17), which can be rotated about a rotation axis (18), for rotating emission of the reference beam (11), so that a laser area (34, 34a, 34b) is defined, the reference beam (11) travelling along a reference path and at least a part of the reference path being perceptible as a reference line (35, 35a, 35b) visually and/or by means of a detector on a surface (32),
• swiveling means for swiveling the rotation axis (18) about at least one swivel axis, in particular about two swivel axes,
• a distance measurement unit for measuring distances (d) to points on the reference path, and
• control means for controlling the swiveling means and for comparing distances (d),
**characterized in that**
the rotating laser (1) has a functionality for perpendicular orientation of the laser area (34, 34a, 34b) relative to the surface (32), the control means being formed in such a way that the following steps are carried out automatically:
• varying inclination of the laser area (34, 34a, 34b) relative to the surface (32) by swiveling the rotation axis (18), determination of a reference line distance from the reference line (35, 35a, 35b) to the rotating laser (1) respectively being carried out by correlating points measured on the reference line (37, 37a) to respective inclination angles,
• determination of that inclination angle of the laser area (34, 34a, 34b) as a perpendicular inclination angle, for which the laser area (34, 34a, 34b) contains the reference line (35, 35a, 35b) with the respectively shortest determined reference line distance and is therefore perpendicular relative to the surface (32).

2. The rotating laser (1) as claimed in claim 1, **characterized in that**
the following additional step is carried out in the scope of the functionality:
adjustment of the inclination angle of the laser area (34, 34a, 34b) to the perpendicular inclination angle, or
in the scope of the functionality, orientation of a laser area (34, 34a, 34b) relative to a first and a second surface (32), lying opposite the first, is carried out with the following steps:
• with the varying inclination of the laser area (34, 34a, 34b), reference line distances to reference lines (35, 35a, 35b) lying on the first and second surface (32) are determined,
• for the first and second surface (32), the determination of two inclination angles of the laser area (34, 34a, 34b) is carried out as a first and second perpendicular inclination angle, for which the laser area (34, 34a, 34b) respectively contains a first and second reference line (35, 35a, 35b) with a respective first and second shortest determined reference line distance, and is therefore perpendicular relative to the first and/or second surface (32), and
• adjustment of the inclination angle of the laser area (34, 34a, 34b) to a central, in particular arithmetically averaged, inclination angle between the first and second perpendicular inclination angles.

3. The rotating laser (1) as claimed in either of claims 1 and 2,
**characterized in that**
the inclination angles and the reference line distances respectively determined therefor are linked together to form value pairs and stored in a database, particularly in a table, in particular with the distance measurement being carried out at least with parts of the reference beam (11) reflected at the surface (32),
and/or
the rotating laser (1) comprises means for determining an emission angle of the reference beam (11) with the aid of a rotational setting of the deflection means (17), and measurement values for distances (d) to points (37, 37a) at defined emission angles are accumulated and an average value for measured distances (d) is determined.

4. The rotating laser (1) as claimed in any one of the preceding claims,
**characterized in that**
the determination of the reference line distance to the rotating laser (1) is carried out by measurement of distances (d) and determination of emission angles to
• at least two points (37, 37a) on the reference line (35, 35a, 35b), a profile of the reference line (35, 35a, 35b) being derived from the distances (d) and the emission angles, and a shortest path from the rotating laser (1) to the reference line (35, 35a, 35b) being calculated mathematically, this being taken into account as the reference line distance to the rotating laser (1), and/or
• a multiplicity of points (37, 37a) on the reference line (35, 35a, 35b) with a predetermined resolution, in particular with a resolution of 5-50 points per 10° of angle variation of the deflection means, a minimum distance (d) being determined by a comparison of distances (d) to the points (37, 37a), in particular a minimum distance (d) being determined by a calculation of a minimum of a function representing the distances (d) and emission angles, this being taken into account as the reference line distance to the rotating laser (1) .

5. The rotating laser (1) as claimed in any one of the preceding claims,
**characterized in that**
the varying inclination of the laser area (34, 34a, 34b) for the determination of the shortest reference line distance to the rotating laser (1) being carried out until a minimum is established in a profile of a measurement curve (40) recorded in this case,
and/or
the rotating laser (1) comprises a laser core module having a laser beam source (9) and having the deflection means (17), which can be rotated about the rotation axis (18) and which are provided as a guide means for a laser beam, the laser beam (11) being emitted parallel to the rotation axis and the laser core module being swivelable about at least one axis (36), in particular about two axes.

6. The rotating laser (1) as claimed in any one of the preceding claims,
**characterized in that**
the distance measurement unit comprises an emission unit and a reception unit, and is designed in such a way that emission and reception of a measurement beam for the distance measurement take place in a parallel direction, in particular coaxially, in particular with the distance measurement being carried out by means of waveform digitization.

7. The rotating laser (1) as claimed in any one of the preceding claims,
**characterized in that**
the rotation axis (18) can be automatically orientated horizontally or vertically by means of the swiveling means, in particular with the rotation axis (18) being orientatable horizontally or vertically as a function of a measurement value of an inclination sensor (19, 39) .

8. The rotating laser (1) as claimed in any one of the preceding claims,
**characterized in that**
at least a first and a second projection inclination angle can be adjusted as an inclination angle for the laser area (34, 34a, 34b), in such a way that there is a defined distance between the reference lines (35, 35a, 35b) generated on the surface with the at least two projection inclination angles, in particular with a multiplicity of projection inclination angles being adjustable and the distances between two respectively neighboring reference lines (35, 35a, 35b) thereby generated on the surface being identical.

9. A method for the perpendicular orientation of a laser area (34, 34a, 34b) defined by emission, rotating about a rotation axis (18), of a reference beam (11), relative to a surface (32), the reference beam (11) travelling along a reference path and at least a part being perceptible as a reference line (35, 35a, 35b) visually and/or by means of a detector on the surface (32)
**characterized in that**
the following steps are carried out:
• varying inclination of the laser area (34, 34a, 34b) relative to the surface (32) with determination of a reference line distance from the reference line (35, 35a, 35b) to the rotating laser (1) respectively being carried out by correlating points measured on the reference line (37, 37a) to respective inclination angles, and
• determination of that inclination angle of the laser area (34, 34a, 34b) as a perpendicular inclination angle, for which the laser area (34, 34a, 34b) contains the reference line (35, 35a, 35b) with the respectively shortest determined reference line distance and is therefore perpendicular relative to the surface (32).

10. The method as claimed in claim 9,
**characterized in that**
the method comprises the following additional step:
adjustment of the inclination angle of the laser area (34, 34a, 34b) to the perpendicular inclination angle, or
in the scope of a refinement of the method, orientation of a laser area (34, 34a, 34b) relative to a first and a second surface (32), lying opposite the first, is carried out with the following steps:
• with the varying inclination of the laser area (34, 34a, 34b), reference line distances to reference lines (35, 35a, 35b) lying on the first and second surface (32) are determined,
• for the first and second surface (32) the determination of two inclination angles of the laser area (34, 34a, 34b) is carried out as a first and second perpendicular inclination angle, for which the laser area (34, 34a, 34b) respectively contains a first and second reference line (35, 35a, 35b) with a respective first and second shortest determined reference line distance, and is therefore perpendicular relative to the first and/or second surface (32), and
• adjustment of the inclination angle of the laser area (34, 34a, 34b) to a central, in particular arithmetically averaged, inclination angle between the first and second perpendicular inclination angles.

11. The method as claimed in either of claims 9 or 10,
**characterized in that**
before the perpendicular orientation of the laser area (34, 34a, 34b), the laser area (34, 34a, 34b) is orientated roughly perpendicularly to the surface (32), in particular with orientation of the laser area (34, 34a, 34b) being carried out parallel or perpendicular to the gravitational field, in particular horizontally or vertically.,

12. The method as claimed in any one of claims 9 to 11,
**characterized in that**
an absolute position of at least one point (37, 37a), in particular of a plurality of points (37, 37a), on the reference path is determined in relation to an external coordinate system, an emission angle being recorded according to a setting of a rotation axis (18) provided for guiding the reference beam (11), and the distance (d) to this point (37, 37a) being measured, in particular with the coordinates of the point (37, 37a) on the reference path being determined in relation to the external coordinate system.

13. The method as claimed in any one of claims 9 to 12,
**characterized in that**
the determination of a reference line distance is carried out by means of emission and reception of a measurement beam, the emission and reception taking place in parallel directions, in particular coaxially, in particular with the reference line distance being determined by means of waveform digitization.

14. The method as claimed in any one of claims 9 to 13,
**characterized in that**
at least a first and a second projection inclination angle are adjusted as an inclination angle for the laser area (34, 34a, 34b), in such a way that there is a defined distance between the reference lines (35, 35a, 35b) generated on the surface with the at least two projection inclination angles, in particular with a multiplicity of projection inclination angles being adjusted and the distances between two respectively neighboring reference lines (35, 35a, 35b) thereby generated on the surface being identical.

15. A computer program product which is stored on a machine-readable medium, or a computer data signal embodied by an electromagnetic wave, having program code for carrying out the method as claimed in any one of claims 9 to 14, in particular when the program is run in an electronic data processing unit of a rotating laser.

## Revendications

1. Laser rotatif (1), avec :
• une source de rayonnement électromagnétique (9), en particulier une source de faisceau laser, pour la production d'un faisceau de référence (11),
• des moyens de déviation (17) pouvant tourner autour d'un axe de rotation (18) pour l'émission rotative du faisceau de référence (11), ce qui définit une surface laser (34, 34a, 34b), et le faisceau de référence (11) parcourant un chemin de référence, et au moins une partie du chemin de référence pouvant être perçue en tant que ligne de référence (35, 35a, 35b) visuellement et/ou au moyen d'un détecteur sur une surface (32),
• des moyens de pivotement pour le pivotement de l'axe de rotation (18) autour d'au moins un axe de pivotement, en particulier autour de deux axes de pivotement,
• une unité de mesure distance destinée à la mesure de distances (d) à des points sur le chemin de référence, et
• des moyens de commande destinés à la commande des moyens de pivotement et à la comparaison de distances (d), **caractérisé en ce que**
le laser rotatif (1) présente une fonctionnalité pour l'orientation perpendiculaire de la surface laser (34, 34a, 34b) relativement à la surface (32), les moyens de commande étant constitués de telle sorte que les étapes suivantes sont effectuées automatiquement :
• opération d'inclinaison variable de la surface laser (34, 34a, 34b) relativement à la surface (32) par pivotement de l'axe de rotation (18), respectivement une définition d'une distance de ligne de référence de la ligne de référence (35, 35a, 35b) au laser rotatif (1) étant effectuée par le rapprochement de points (37, 37a) mesurés sur la ligne de référence vers des angles d'inclinaison respectifs,
• définition de l'angle d'inclinaison de la surface laser (34, 34a, 34b) en tant qu'angle d'inclinaison perpendiculaire pour lequel la surface laser (34, 34a, 34b) contient la ligne de référence (35, 35a, 35b) ayant la plus faible distance de ligne de référence et est donc perpendiculaire relativement à la surface (32).

2. Laser rotatif (1) selon la revendication 1, **caractérisé en ce que**,
dans le cadre de la fonctionnalité, l'étape suivante est en plus effectuée :
réglage de l'angle d'inclinaison de la surface laser (34, 34a, 34b) sur l'angle d'inclinaison perpendiculaire, ou
dans le cadre de la fonctionnalité, une orientation d'une surface laser (34, 34a, 34b) relativement à une première et à une deuxième surface (32) opposée à la première étant effectuée avec les étapes suivantes :
• lors de l'opération d'inclinaison variable de la surface laser (34, 34a, 34b), des distances de ligne de référence à des lignes de référence (35, 35a, 35b) situées sur la première et la deuxième surface (32) sont définies,
• pour la première et la deuxième surface (32), il est effectué la définition de deux angles d'inclinaison de la surface laser (34, 34a, 34b) en tant que premier et deuxième angle d'inclinaison perpendiculaire, pour lesquels la surface laser (34, 34a, 34b) contient respectivement une première et deuxième ligne de référence (35, 35a, 35b) ayant une première et deuxième distance de ligne de référence la plus faible respectivement et est donc perpendiculaire à la première et/ou à la deuxième surface (32), et
• réglage de l'angle d'inclinaison de la surface laser (34, 34a, 34b) sur un angle d'inclinaison moyen, en particulier pondéré de façon arithmétique, entre le premier et le deuxième angle d'inclinaison perpendiculaire.

3. Laser rotatif (1) selon la revendication 1 ou 2, **caractérisé en ce que**
les angles d'inclinaison et les distances de ligne de référence définis respectivement en l'occurrence sont reliés les uns aux autres pour former des paires de valeurs et sont enregistrés dans une base de données, en particulier dans un tableau, en particulier la mesure de distance s'effectuant au moins avec des parties du faisceau de référence (11) réfléchi par la surface (32), et/ou
le laser rotatif (1) présente des moyens destinés à la définition d'un angle d'émission du faisceau de référence (11) à l'aide d'une position de rotation des moyens de déviation (17), et des valeurs de mesure de distances (d) à des points (37, 37a) dans des angles d'émission définis sont accumulées, et une valeur moyenne de distances (d) mesurées est déterminée.

4. Laser rotatif (1) selon l'une des revendications précédentes,
**caractérisé en ce que**
la définition de la distance de ligne de référence au laser rotatif (1) s'effectue par une mesure de distances (d) et une définition d'angles d'émission par rapport à
• au moins deux points (37, 37a) sur la ligne de référence (35, 35a, 35b), un tracé de la ligne de référence (35, 35a, 35b) étant dérivé des distances (d) et des angles d'émission, et un trajet le plus court entre le laser rotatif (1) et la ligne de référence (35, 35a, 35b) étant calculé mathématiquement et étant pris en compte en tant que la distance de ligne de référence au laser rotatif (1), et/ou
• à une multiplicité de points (37, 37a) sur la ligne de référence (35, 35a, 35b) avec une résolution prédéfinie, en particulier avec une résolution de 5-50 points pour 10° de variation angulaire des moyens de déviation, une comparaison de distances (d) aux points (37, 37a) définissant une distance (d) minimale, une distance (d) minimale étant en particulier définie par un calcul d'un minimum d'une fonction qui représente les distances (d) et les angles d'émission et qui est prise en compte en tant que distance de ligne de référence au laser rotatif (1) .

5. Laser rotatif (1) selon l'une des revendications précédentes,
**caractérisé en ce que**
l'opération d'inclinaison variable de la surface laser (34, 34a, 34b) pour la définition de la distance de ligne de référence la plus faible au laser rotatif (1) est effectuée jusqu'à ce qu'un minimum soit constaté dans une allure d'une courbe de mesure (40) enregistrée en l'occurrence,
et/ou
le laser rotatif (1) présente un module de noyau laser avec une source de rayonnement électromagnétique (9) et avec les moyens de déviation (17) pouvant tourner autour de l'axe de rotation (18) qui sont prévus en tant que moyens de guidage pour un faisceau laser, le faisceau de référence (11) émettant parallèlement à l'axe de rotation, et le module de noyau laser pouvant tourner autour d'au moins un axe (36), en particulier autour de deux axes.

6. Laser rotatif (1) selon l'une des revendications précédentes,
**caractérisé en ce que**
l'unité de mesure de distance présente une unité d'émission et une unité de réception, et est constituée de telle sorte que, pour la mesure de distance, une émission et une réception d'un faisceau de mesure sont effectuées dans une direction parallèle, en particulier de façon coaxiale, la mesure de distance étant en particulier effectuée au moyen d'une numérisation sous forme d'onde.

7. Laser rotatif (1) selon l'une des revendications précédentes,
**caractérisé en ce que**
l'axe de rotation (18) peut être orienté horizontalement ou verticalement automatiquement au moyen des moyens de pivotement, l'axe de rotation (18) pouvant en particulier être orienté horizontalement ou verticalement en fonction d'une valeur de mesure d'un capteur d'inclinaison (19, 39) .

8. Laser rotatif (1) selon l'une des revendications précédentes,
**caractérisé en ce**
**qu'**au moins un premier et un deuxième angle d'inclinaison de projection peuvent être réglés en tant qu'angles d'inclinaison pour la surface laser (34, 34a, 34b) de telle sorte qu'on est en présence d'un intervalle défini entre les lignes de référence (35, 35a, 35b) produites sur la surface en présence des au moins deux angles d'inclinaison de projection, une multiplicité d'angles d'inclinaison de projection en particulier pouvant être réglés, et les intervalles entre respectivement deux lignes de référence (35, 35a, 35b) voisines produites de ce fait sur la surface étant identiques.

9. Procédé destiné à l'orientation perpendiculaire d'une surface laser (34, 34a, 34b) définie par une émission, tournant autour d'un axe de rotation (18), d'un faisceau de référence (11) relativement à une surface (32), le faisceau de référence (11) parcourant un chemin de référence, et au moins une partie pouvant être perçue en tant que ligne de référence (35, 35a, 35b) visuellement et/ou au moyen d'un détecteur sur une surface (32), **caractérisé en ce que**
les étapes suivantes sont effectuées :
• opération d'inclinaison variable de la surface laser (34, 34a, 34b) relativement à la surface (32), respectivement une définition d'une distance de ligne de référence de la ligne de référence (35, 35a, 35b) au laser rotatif (1) étant effectuée par le rapprochement de points (37, 37a) mesurés sur la ligne de référence vers des angles d'inclinaison respectifs, et
• définition de l'angle d'inclinaison de la surface laser (34, 34a, 34b) en tant qu'angle d'inclinaison perpendiculaire pour lequel la surface laser (34, 34a, 34b) contient la ligne de référence (35, 35a, 35b) ayant la plus faible distance de ligne de référence et est donc perpendiculaire relativement à la surface (32).

10. Procédé selon la revendication 9,
**caractérisé en ce que**
le procédé présente l'étape supplémentaire suivante :
réglage de l'angle d'inclinaison de la surface laser (34, 34a, 34b) sur l'angle d'inclinaison perpendiculaire, ou,
dans le cadre d'un perfectionnement du procédé, une orientation d'une surface laser (34, 34a, 34b) relativement à une première et à une deuxième surface (32) opposée à la première étant effectuée avec les étapes suivantes :
• lors de l'opération d'inclinaison variable de la surface laser (34, 34a, 34b), des distances de la ligne de référence à des lignes de référence (35, 35a, 35b) situées sur la première et la deuxième surface (32) sont définies,
• pour la première et la deuxième surface (32), il est effectué la définition de deux angles d'inclinaison de la surface laser (34, 34a, 34b) en tant que premier et deuxième angle d'inclinaison perpendiculaire pour lesquels la surface laser (34, 34a, 34b) contient respectivement une première et deuxième ligne de référence (35, 35a, 35b) ayant une première et deuxième distance de ligne de référence la plus faible respectivement et est donc perpendiculaire à la première et/ou à la deuxième surface (32), et
• réglage de l'angle d'inclinaison de la surface laser (34, 34a, 34b) sur un angle d'inclinaison moyen, en particulier pondéré de façon arithmétique, entre le premier et le deuxième angle d'inclinaison perpendiculaire.

11. Procédé selon la revendication 9 ou 10,
**caractérisé en ce que**,
avant l'orientation perpendiculaire de la surface laser (34, 34a, 34b), la surface laser (34, 34a, 34b) est orientée grossièrement perpendiculairement à la surface (32), en particulier une orientation de la surface laser (34, 34a, 34b) parallèlement ou perpendiculairement au champ gravitationnel étant effectuée, en particulier horizontalement ou verticalement.

12. Procédé selon l'une des revendications 9-11,
**caractérisé en ce**
**qu'**une position absolue d'au moins un point (37, 37a), en particulier de plusieurs points (37, 37a), est définie sur le chemin de référence par rapport à système de coordonnées externe, un angle d'émission selon un emplacement d'un axe de rotation (18) prévu pour le guidage du faisceau de référence (11) étant détecté, et la distance (d) à ce point (37, 37a) étant mesurée, en particulier les coordonnées du point (37, 37a) étant définies par rapport au système de coordonnées externe sur le chemin de référence.

13. Procédé selon l'une des revendications 9 à 12,
**caractérisé en ce que**
la définition d'une distance de ligne de référence est effectuée au moyen d'une émission et d'une réception d'un faisceau de mesure, l'émission et la réception étant effectuées dans des directions parallèles, en particulier de façon coaxiale, la distance de ligne de référence en particulier étant définie au moyen d'une numérisation sous forme d'onde.

14. Procédé selon l'une des revendications 9 à 13,
**caractérisé en ce**
**qu'**au moins un premier et un deuxième angle d'inclinaison de projection sont réglés en tant qu'angles d'inclinaison pour la surface laser (34, 34a, 34b) de telle sorte qu'on est en présence d'un intervalle défini entre les lignes de référence (35, 35a, 35b) produites sur la surface en présence des au moins deux angles d'inclinaison de projection, une multiplicité d'angles d'inclinaison de projection en particulier étant réglés, et les intervalles entre respectivement deux lignes de référence (35, 35a, 35b) voisines produites de ce fait sur la surface étant identiques.

15. Produit de programme d'ordinateur qui est enregistré sur un support lisible par machine, ou signal de données d'ordinateur, matérialisé par une onde électromagnétique, avec code de programme destiné à la réalisation du procédé selon l'une des revendications 9 à 14, en particulier quand le programme est exécuté dans une unité électronique de traitement de données d'un laser rotatif.
